(19) Europäisches Patentamt

European Patent Office

Office européen des brevets

(11) Publication number: **0 244 038 B1**

# EUROPEAN PATENT SPECIFICATION

(45) Date of publication of patent specification: 26.06.91

(51) Int. Cl.5: **A01B** 33/06, A01B 33/16, A01B 49/02

(21) Application number: 87200797.6

(22) Date of filing: 28.04.87

(54) A soil cultivating machine.

(30) Priority: 01.05.86 NL 8601115

(43) Date of publication of application:
04.11.87 Bulletin 87/45

(45) Publication of the grant of the patent:
26.06.91 Bulletin 91/26

(84) Designated Contracting States:
DE FR GB

(56) References cited:
EP-A- 166 493
NL-A- 7 111 947
NL-A- 7 510 308
US-A- 4 509 438

(73) Proprietor: C. van der Lely N.V.
Weverskade 10 P.O. Box 26
NL-3155 ZG Maasland(NL)

(72) Inventor: Van der Lely, Ary
Weverskade 10a
Maasland(NL)
Inventor: Bom, Cornelis Johannes Gerardus
Laan van Nieuw Rozenburg 16
Rozenburg(NL)

(74) Representative: Mulder, Herman et al
Octrooibureau Van der Lely N.V. Weverskade
10 P.O. Box 26
NL-3155 ZG Maasland(NL)

## Description

The invention relates to a soil cultivating machine comprising a supporting frame and a plurality of soil working members which are supported therein and are drivable about axes, at least one roller being arranged behind said soil working members by means of pivotal arms which, relative to the supporting frame, are adjustable in height by means of at least one adjusting mechanism provided between said supporting frame and a pivotal arm, and the adjusting mechanism, together with a pivotal arm of the roller, is freely movable relative to the supporting frame of the machine, the supporting frame including a support which comprises a guide means for both an adjusting mechanism and a pivotal arm.

A machine of this kind as known from the European patent application 0166493 is usually employed in the preparation of a seed bed and includes a provision, whereby the supporting frame during operation can be moved in height relative to the roller so that the soil working members can deflect upwardly when hitting a hard obstacle so as to prevent the machine from being damage.

With this known construction however in particular with machines having a large working width, the support for the roller is not always reliable.

Moreover, when hard soils are cultivated it is not always possible to have the soil working members penetrate into the soil to the desired depth.

Now, the construction according to the invention provides a reliable provision by means of which a fast and simple setting of the roller with respect to the supporting frame is achieved so as to allow a quick change of the desired working depth of the soil working members and if so desired the movability of the supporting frame relative to the roller can be brought.

In accordance with the invention this is achieved in that the adjusting mechanism is supported near the upper side and the pivotal arm near the lower side of the support in a guide means, the guide means being formed by a slotted guideway in which a pin on the adjusting mechanism and a bolt on the pivotal arm respectively or freely movable and means are provided with the aid of which a movement of the pin on the adjusting mechanism in the slotted guideway can be blocked, that means acting on a said pin which is present at the lower side of a slide member to which the upper side of a threaded spindle of the adjusting mechanism is pivotally connected.

For a better understanding of the present invention and to show how the same may be carried into effect, reference will now be made, by way of example, to the accompanying drawings, in which:

Figure 1 is a plan view of a soil cultivating machine of a construction according to the invention;

Figure 2 is, to an enlarged scale, a view taken in the direction of the arrow II in Figure 1;

Figure 3 is, to an enlarged scale, a side view of the construction according to the invention;

Figure 4 is a view taken in the direction of the arrow IV in Figure 3;

Figure 5 is a view taken on the line V-V in Figure 3, and

Figure 6 is, to an enlarged scale, a view taken on the line VI-VI in Figure 1.

The implement shown in the drawings concerns a soil cultivating machine, in particular one for preparing a seed bed.

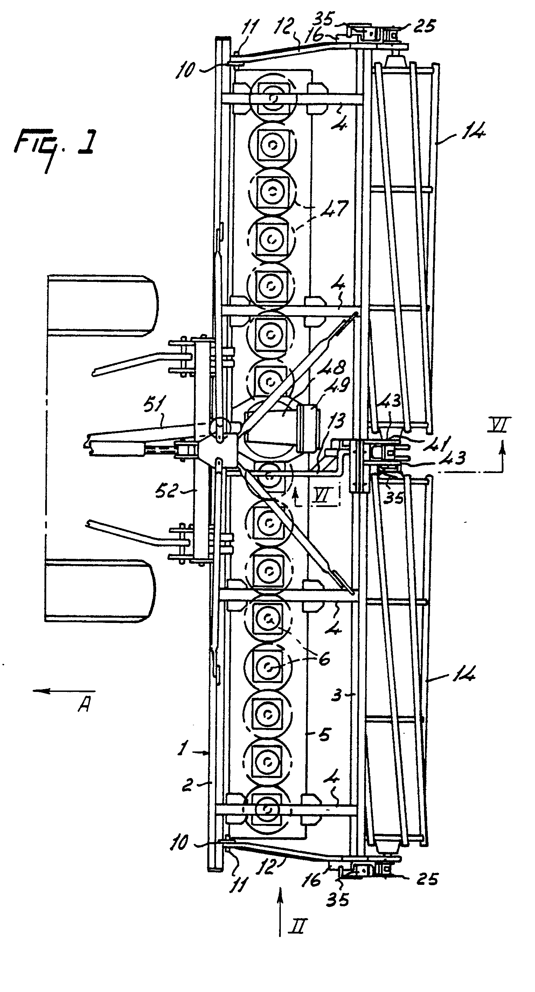

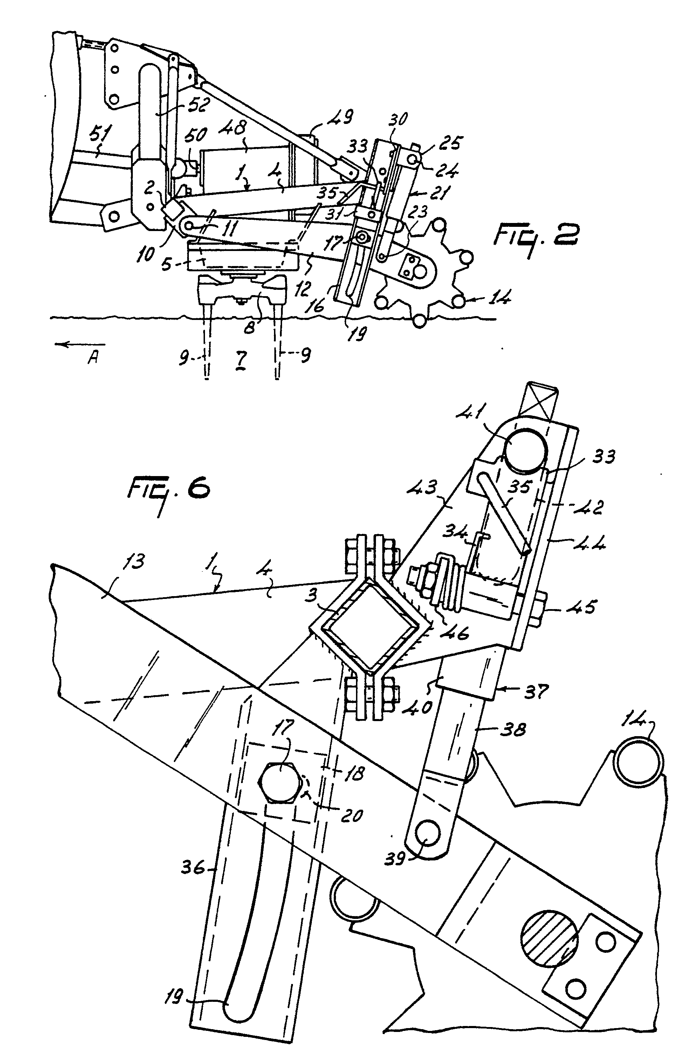

The machine comprises a supporting frame 1 which extends transversely to the direction of operative travel A of the machine and includes two longitudinal beams 2 and 3, which beams are located one behind the other and extend at least substantially horizontally and transversely to the direction of operative travel A. The longitudinal beams 2 and 3 are interconnected by means of supports 4. A box-like frame portion 5 extending over at least substantially the entire length of the longitudinal beams 2 and 3 is mounted on the supports 4, said supports being arranged between the longitudinal beams 2 and 3 in a manner as is shown in Figure 1. As is apparent from Figure 2, the frame portion 5 is located at a lower level than the longitudinal beams 2 and 3, the rear beam 3 being at a higher level than the front beam 2. In the box-like frame portion 5, the upwardly directed, preferably vertical, shafts 6 of soil working members 7 are supported equidistantly, preferably spaced apart by 25 cms. To that end of each shaft 6 of a soil working member 7 projecting from under the frame portion 5 is fastened an at least substantially horizontally extending carrier 8. At its ends, each carrier 8 is provided with downwardly extending soil working elements 9 in the form of tines. At its rear side, near the ends, the front longitudinal beam 2 has a lug 10 to which an arm 12 is fitted by means of a pin 11, which extends transversely to the direction of operative travel A. The arms 12 extend obliquely downwardly and rearwardly. Each arm 12 has an end portion which extends obliquely downwardly and rearwardly and merges into the front portion of said arm via a bend (Figure 2).

Two rollers 14, which are in line with each other and are freely rotatable and in this embodiment are in the form of a cage roller, are provided between the ends of the arms 12 and an arm 13 located near the centre of the supporting frame 1 at the rear side of the front longitudinal beam 2; however, the rollers may be of a different construction, e.g. they may be designed as a packer roller.

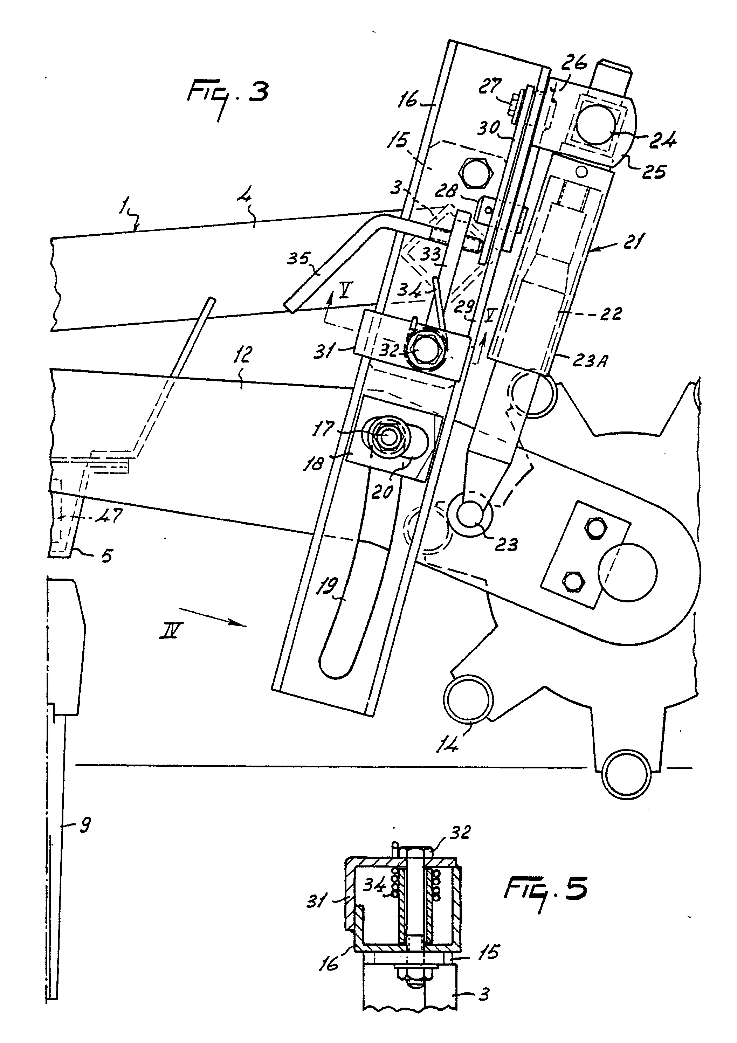

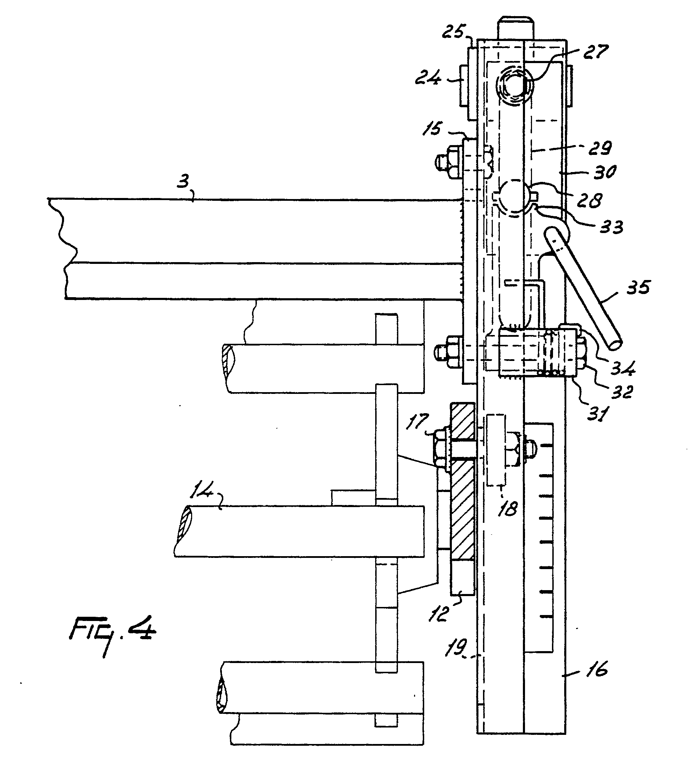

The ends of the rear longitudinal beam 3 are provided with a plate 15 (Figure 3). A support 16 is fastened to the plate 15 at a distance from its upper end which is at least substantially equal to one third of the length of the support. As is apparent from Figures 2 and 3, the straight support 16 extends obliquely forwardly and downwardly. Each support 16 is U-shaped and is applied in such a manner that the legs are directed outwardly. The rear leg is longer than the front one which has a length equal to approximately half that of the rear leg, which is advantageous for mounting the provisions to be described hereinafter (Figure 5). Each arm has a pin 17 in the form of a bolt. The pin 17 is passed through a slide member 18 provided between the legs of the U-shaped support. The pin 17 is capable of movement in a slotted guideway 19 provided in the portion located between the legs of the U and in a transverse slot 20 in the slide member 18. The slotted guideway 19 is such that the longitudinal centre line of the pin 11, which constitutes a pivot pin for an arm 12, at least substantially constitutes the centre line thereof. Behind a support 16, each arm 12 is provided with an adjusting mechanism 21 comprising a threaded spindle 22. The bottom end of the threaded spindle 22 is connected pivotally to an arm 12 via a pin 23 which extends transversely to the direction of operative travel A. At its upper side, the threaded spindle 22 is surrounded by a tube 23A and is pivotally bearing-supported by means of a pin 24 between lugs 25. The lugs 25 are provided on a slide member 26 which bears against the outer side of the rear leg of the U-shaped support 16 and is movable up and down, respectively, by means of two pins 27 and 28 located near the ends, in a slotted guideway 29 provided in the said rear leg. The pins 27 and 28 are interconnected at the inner side of the rear leg of the U-shaped support 16 by means of a strip 30. Approximately halfway its length, the U-shaped support 16 is provided with a transverse piece 31 arranged between the legs. The transverse piece 31 is fitted with a bolt 32 about which an arm 33, located between the legs of the U-shaped support 16, is pivotal. The arm 33 is spring-loaded by means of a spring 34, the arrangement being such that the arm tends to swing towards the rear leg of the U-shaped support 16. Near its upper side, the arm 33 is provided with a threaded hole, in which a threaded end of an adjusting arm 35 is rotatable. That end of the portion of the adjusting arm 35 passed through the arm 33 bears below the pin 27 against the strip 30 which is located around the pins 27 and 28 at the inner side of the rear leg of the U-shaped support 16. By means of the adjusting arm 35 the arm 33 can be pivoted such that its upper end arrives in the path of the lower pin 28 on the slide member 26 of the adjusting mechanism 21 and thus blocks the movement of this pin in the guideway 29 and hence that of the slide member 26. To that end the arm 33 has at its upper side a recess whose shape corresponds to the curvature of the pin 28 (Figure 4). The spacing between the slide member 26 carrying the pins 27 and 28, and an arm 12 can be adjusted by means of the threaded spindle 22. At the level of the arm 13, the rear longitudinal beam 3 is provided at its front side with a U-shaped support 36 which extends obliquely forwardly and downwardly (Figure 6). The support 36 has a slotted guideway 19 provided in a similar manner as in the U-shaped supports 16 at the ends of the longitudinal beam 3. For the arm 13 there is provided an adjusting mechanism 37. The adjusting mechanism 37 comprises a threaded spindle 38, the bottom end of which is arranged pivotally to the arm 13 via a pin 39 (Figure 6). The upper end of the threaded spindle is surrounded by a tube 40 and has diametrically opposite pins 41 which are capable of upward and downward movement, respectively, in a slotted guideway 42. The slotted guideways are provided in plate-shaped supports 43, which are located on both sides of the threaded spindle 38 and are secured on the longitudinal beam 3. One of the plate-shaped supports 43 has its rear side folded through 90° over a portion 44. Near the lower side, a bolt 45 is passed through the portion 44 of the relevant support 43. At its front side, the bolt 45 is supported by a lug 46. An arm 33 is arranged pivotally around the bolt 45, which arm can be moved to within the reach of the pin 41 by means of a spring 34 after the adjusting arm 35 has been turned back, so that a downward movement of the pin is prevented hereby (Figure 6). Within the box-like frame portion 5, each of the shafts 6 includes a pinion 47, the arrangement being such that the pinions on the shafts of adjacent soil working members 7 are in driving connection with each other. Near the centre, the shaft of a soil working member 7 is extended. This extension reaches to within a gear box 48, where this shaft is in driving connection via a conical gear wheel transmission with a shaft, which extends in the direction of operative travel A and is in driving connection via a speed variator 49 at the rear side of the gear box 48 with a superjacent shaft 50 which extends in the direction of operative travel A and projects from the front side of said gear box. The projecting end of the shaft 50 can be coupled to the power take-off shaft of a tractor via an intermediate shaft 51. The front longitudinal beam 2 of the supporting frame 1 is provided with a trestle 52 which constitutes a three-point connection for coupling of the machine to the three-point lifting hitch of a tractor.

The machine described in the foregoing operates as follows:

During operation, the machine is coupled to the three-point lifting hitch of a tractor by means of the trestle 52 and the soil working members 7 are driven, when the machine is moved in the direction indicated by arrow A, from the power take-off shaft via the intermediate shaft 51 and the above-described transmission, such that adjacent soil working members rotate in opposite directions and thereby cultivate at least adjoining strips of soil by means of their soil working elements. The working depth of the soil working members 7 can be set with the aid of the lifting hitch of the tractor, it being possible for the supporting frame 1, when meeting an obstacle, to deflect upwardly relative to the rollers 14 from the position shown in the drawings, because of the fact that the assembly formed by the arms 12, 13 and the adjusting mechanisms 21, 37, which include the respective threaded spindles 22 and 38, can effect a free, limited movement in the respective slotted guideways 19, 29 and 42 in two superjacent points via the respective pins 17, 27, 28 and 17, 41. Consequently, if the soil working members 7 hit hard objects in the soil, the supporting frame 1 can move upwardly relative to the rollers 14, so that damage to the soil working elements of the soil working members can be prevented as well as any damage to the drive means for the soil working members.

If a setting of the depth by means of the rollers 14 is desired, it is possible to swivel the pivotal arms 33 by means of the adjusting arms 35 such that the upper end of the pivotal arms is moved to below the respective pins 28 and 41, which prevents the adjusting mechanism 21 and 37, respectively, and the arms 12 and 13, respectively, from being moved. Thereafter, with the aid of the threaded spindles 22, 38, the arms 12 and the arm 13, respectively, can be set such that the desired working depth of the soil working members is obtained. Hereby the pin located on the respective arms 12 and 13 and constituted by the bolt 17, can move in the curved, slotted guideway 19 until the desired position has been reached, whereafter the bolt can be tightened, so that an additional locking of the arm relative to the respective supports 16 and 36 is obtained. If thereafter one wants again to create a possibility for the supporting frame 1 to move relative to the rollers 14, then it is possible to move the arms 33 to outside the reach of the respective pins 28 and 41 by means of the rotatable adjusting arms 35, as a result of which said limited, free motion of the supporting frame is effected again. Although this is not shown in the drawings, it will be obvious that the rollers 14 may alternatively be replaced by one single roller having at its ends the provision illustrated in Figures 1 to 3.

Using the above-described construction it is possible to obtain, when a vertically movable supporting frame is used, an easily operable and compact adjusting mechanism for the arms of a roller, which moreover is protected against dirt and damage and allows of a rapidly blocking of the mobility of the supporting frame.

## Claims

1. A soil cultivating machine comprising a supporting frame (1) and a plurality of soil working members (17) which are supported therein and are drivable about axes, at least one roller (14) being arranged behind said soil working members (7) by means of pivotal arms (12, 13) which, relative to the supporting frame (1), are adjustable in height by means of at least one adjusting mechanism (21, 37) provided between said supporting frame (1) and a pivotal arm (12, 13), and the adjusting mechanism (21, 37), together with a pivotal arm (12, 13) of the roller (14), is freely movable relative to the supporting frame (1) of the machine, the supporting frame (1) including a support (16, 36) which comprises a guide means for both an adjusting mechanism (21, 37) and a pivotal arm (12, 13), characterized in that the adjusting mechanism (21, 37) is supported near the upper side and the pivotal arm (12, 13) near the lower side of the support (16, 36) in a guide means, the guide means being formed by a slotted guideway (29, 42, 19), in which a pin (28, 41) on the adjusting mechanism (21, 37) and a bolt (17) on the pivotal arm (12, 13), respectively, are freely movable and means are provided with the aid of which a movement of the pin (28, 41) on the adjusting mechanism (21, 37) in the slotted guideway (29, 42) can be blocked, that means acting on said pin (28, 41) which is present at the lower side of a slide member (26), to which the upper side of a threaded spindle (22, 38) of the adjusting mechanism (21, 37) is pivotally connected.

2. A soil cultivating machine as claimed in claim 1, characterized in that the said means include a pivotal latch (33), the upper side of which can cooperate with the said pin (28) on the slide member (26).

3. A soil cultivating machine as claimed in claim 1, characterized in that the said means include a pivotal latch (33) which can cooperate with a pin (41) which constitutes a hinging connection for the upper end of a threaded spindle (38) of the adjusting mechanism (37), so as to block a movement of said pin (41) in the slotted guideway (42).

4. A soil cultivating machine as claimed in claim 2 or 3, characterized in that the pivotal latch (33) is pivotal under the action of a spring (34) and adjustable by means of an adjusting arm (35), the said pivotal latch (33) having a recess which can cooperate with the pin (28, 41) which is movable in the slotted guideway (29, 42).

5. A soil cultivating machine as claimed in any one of claims 1 to 4, characterized in that the adjusting mechanism (21, 37) includes a threaded spindle (22, 38) which can be moved by the pivotal arm (12, 13) and forms a connection between two superjacent points which are movable in height relative to the supporting frame (1).

6. A soil cultivating machine as claimed in any one of the preceding claims, characterized in that both ends of the roller (14) are provided with an adjusting mechanism (21, 37) which is freely movable in height relative to the supporting frame (1) together with a pivotal arm (12, 13) for the roller (14).

7. A soil cultivating machine as claimed in claim 6, characterized · in that two rollers (14) are located next to each other and in alignment with each other, whilst an adjusting mechanism (37) which can be moved in conjunction with a pivotal arm (13) for the rollers (14) is located halfway the supporting frame (1) between the rollers (14) and an adjusting mechanism (21) which can be moved by means of a pivotal arm (12) for a roller (14) is located at the outer sides of the rollers (14).

## Revendications

1. Machine pour cultiver le sol comprenant un chassis de support (1) et une pluralité d'organes de travail du sol (7) qui sont supportés dans ce chassis et peuvent être entraînés autour d'axes, au moins un rouleau (14) étant disposé derrière lesdits organes de travail du sol (7) au moyen de bras pivotants (12, 13) qui sont réglables en hauteur par rapport au chassis de support (1) au moyen d'au moins un mécanisme de réglage (21, 37) prévu entre ledit chassis de support (1) et un bras pivotant (12, 13), et le mécanisme de réglage (21, 37) étant librement mobile, ensemble avec un bras pivotant (12, 13) du rouleau (14) par rapport au chassis de support (1) de la machine, le chassis de support (1) comportant un support (16, 36) qui comprend un moyen de guidage, à la fois pour un mécanisme de réglage (21, 37) et pour un bras pivotant (12, 13), caractérisée en ce que le mécanisme de réglage (21, 37) est supporté près du côté supérieur du support (16, 36), et le bras pivotant (12, 13) est supporté près du côté inférieur dudit support (16, 36), dans un moyen de guidage, le moyen de guidage étant formé par une glissière rainurée (29, 42, 19) dans laquelle sont librement mobiles un goujon (28, 41) sur le mécanisme de réglage (21, 37) et un boulon (17) sur le bras pivotant (12, 13), respectivement, des moyens étant prévus à l'aide desquels un mouvement du goujon (28, 41) sur le mécanisme de réglage (21, 37) dans la glissière rainurée (29, 42) peut être bloqué, ces moyens agissant sur ledit goujon (28, 41) qui est présent sur le côté inférieur d'un organe de coulissement (26) sur lequel est articulé le côté supérieur d'une tige filetée (22, 38) du mécansime de réglage (21, 37).

2. Machine pour cultiver le sol selon la revendication 1, caractérisée en ce que lesdits moyens comprennent un loquet pivotant (33) dont le côté supérieur peut coopérer avec ledit goujon (28) sur l'organe de coulissement (26).

3. Machine pour cultiver le sol selon la revendication 1, caractérisée en ce que lesdits moyens comprennent un loquet pivotant (33) qui peut coopérer avec un goujon (41) qui constitue une liaison articulée pour l'extrémité supérieure d'une vis filetée (38) du mécanisme de réglage (37) de manière à bloquer un mouvement dudit goujon (41) dans la glissière rainurée (42).

4. Machine pour cultiver le sol selon la revendication 2 ou 3, caractérisée en ce que le loquet pivotant (33) peut pivoter sous l'action d'un ressort (34) et est réglable au moyen d'un bras de réglage (35), ledit loquet pivotant (33) ayant une encoche qui peut coopérer avec le goujon (28, 41) qui est mobile dans la glissière rainurée (29, 42).

5. Machine pour cultiver le sol selon l'une quelconque des revendications 1 à 4, caractérisée en ce que le mécanisme de réglage (21, 37) comporte une tige filetée (22, 38) qui peut être entraînée par le bras pivotant (12, 13) et qui forme une liaison entre deux points superposés qui sont mobiles en hauteur par rapport au chassis de support (1).

6. Machine pour cultiver le sol selon l'une quelconque des revendications précédentes, caractérisée en ce que les deux extrémités du rouleau (14) sont munies d'un mécanisme de réglage (21, 37) qui est librement mobile en hauteur par rapport au chassis de support (1), ensemble avec un bras pivotant (12, 13) pour le rouleau (14).

7. Machine pour cultiver le sol selon la revendication 6, caractérisée en ce que deux rouleaux (14) sont situés côte à côte et alignés entre eux, tandis qu'un mécanisme de réglage (37) pouvant être entraîné conjointement avec un bras pivotant (13) pour les rouleaux (14) est situé à mi-longueur du chassis de support (1) entre les rouleaux (14), et un mécanisme de réglage (21) pouvant être entraîné au moyen d'un bras pivotant (12) pour un rouleau (14) est situé sur les côtés extérieurs des rouleaux (14).

**Ansprüche**

1. Bodenbearbeitungsmaschine mit einem Tragrahmen (1) und mehreren Bodenbearbeitungsgliedern (7), die an ihm abgestützt und um Achsen antreibbar sind, bei der mindestens eine Walze (14) hinter den Bodenbearbeitungsgliedern (7) mittels Schwenkarmen (12, 13) angeordnet ist, die relativ zu dem Tragrahmen (1) mittels mindestens einer Stellvorrichtung (21, 37) höhenverstellbar sind, die zwischen dem Tragrahmen (1) und einem Schwenkarm (12, 13) vorgesehen und zusammen mit einem Schwenkarm (12, 13) der Walze (14) relativ zu dem Tragrahmen (1) der Maschine frei beweglich ist; der Tragrahmen (1) weist eine Stütze (16, 36) auf, die eine Führung für eine Stellvorrichtung (21, 37) und einen Schwenkarm (12, 13) enthält, dadurch gekennzeichnet, daß die Stellvorrichtung (21, 37) nahe der Oberseite und der Schwenkarm (12, 13) nahe der Unterseite der Stütze (16, 36) in einer Führung abgestützt ist, die durch eine Schlitzführung (29, 42, 19) gebildet ist, in der ein an der Stellvorrichtung (21, 37) befindlicher Stift (28, 41) und ein an dem Schwenkarm (12, 13) vorgesehener Bolzen (17) jeweils frei beweglich sind, und daß die Bewegung des an der Stellvorrichtung (21, 37) befindlichen Stiftes (28, 41) in der Schlitzführung (29, 42) durch eine Einrichtung zu blockieren ist, die auf den Stift (28, 41) einwirkt, der an der unteren Seite eines Gleitstückes (26) vorgesehen ist, mit dem die obere Seite einer Gewindespindel (22, 38) der Stellvorrichtung (21, 37) schwenkbeweglich verbunden ist.

2. Bodenbearbeitungsmaschine nach Anspruch 1,

dadurch gekennzeichnet, daß die genannte Einrichtung einen schwenkbaren Riegel (33) aufweist, dessen obere Seite mit dem an dem Gleitstück (26) befindlichen Stift (28) zusammenwirken kann.

3. Bodenbearbeitungsmaschine nach Anspruch 1, dadurch gekennzeichnet, daß die genannte Einrichtung einen schwenkbaren Riegel (33) aufweist, der mit einem Stift (41) zusammenwirken kann, der eine Gelenkverbindung für das obere Ende einer Gewindespindel (38) der Stellvorrichtung (37) bildet, derart, daß eine Bewegung des Stiftes (41) in der Schlitzführung (42) blockiert werden kann.

4. Bodenbearbeitungsmaschine nach Anspruch 2 oder 3,
dadurch gekennzeichnet, daß der Riegel (33) unter der Wirkung einer Feder (34) schwenkbar und mittels eines Stellarmes (35) einstellbar ist, und daß der Riegel (33) eine Ausnehmung aufweist, die mit dem Stift (28, 41) zusammenwirken kann, der in der Schlitzführung (29, 42) bewegbar ist.

5. Bodenbearbeitungsmaschine nach einem der Ansprüche 1 bis 4,
dadurch gekennzeichnet, daß die Stellvorrichtung (21, 37) eine Gewindespindel (22, 38) aufweist, die mittels des Schwenkarmes (12, 13) bewegbar ist und eine Verbindung zwischen zwei übereinanderliegenden Punkten bildet, die relativ zu dem Tragrahmen (1) höhenbewegbar sind.

6. Bodenbearbeitungsmaschine nach einem der vorhergehenden Ansprüche,
dadurch gekennzeichnet, daß beide Enden der Walze (14) mit einer Stellvorrichtung (21, 37) versehen sind, die zusammen mit einem Schwenkarm (12, 13) der Walze (14) relativ zu dem Tragrahmen (1) frei höhenbeweglich ist.

7. Bodenbearbeitungsmaschine nach Anspruch 6, dadurch gekennzeichnet, daß zwei Walzen (14) nahe benachbart und fluchtend zueinander angeordnet sind, daß eine Stellvorrichtung (37), die zusammen mit einem Schwenkarm (13) für die Walzen (14) bewegbar ist, mittig zu dem Tragrahmen (1) zwischen den Walzen (14) angeordnet ist, und daß eine Stellvorrichtung (21), die mittels eines Schwenkarmes (12) einer Walze (14) bewegbar ist, an den äußeren Enden der Walzen (14) angeordnet ist.

EP 0 244 038 B1

FIG. 1

7

FIG. 2

FIG. 6

8

FIG. 3

FIG. 5

FIG.4